# EUROPEAN PATENT APPLICATION

(11) **EP 2 763 459 A1**
(43) Date of publication of application: **06.08.2014**
(21) Application number: 11873261.9
(22) Date of filing: 29.09.2011
(51) Int. Cl.: H04W 36/00

(54) **METHOD AND DEVICE FOR ESTIMATING TERMINAL MOVING STATUS**

(71) Applicant: Fujitsu Limited, Kawasaki-shi, Kanagawa 211-8588 (JP)
(72) Inventor: LU, Yanling, Beijing 100025 (CN); WANG, Weiwei, Beijing 100025 (CN); XU, Haibo, Beijing 100025 (CN); CHANG, Ningjuan, Beijing 100025 (CN)
(74) Representative: Reichl, Philipp
(86) International application number: PCT/CN2011/080389
(87) International publication number: WO 2013/044489

(57) **Abstract**

Embodiments of the present invention provide a method and apparatus for estimating mobility status of a terminal. The method includes: determining, by the terminal, whether a handover or a cell reselection happens between groups or within a group according to received network topology information; counting, by the terminal, the handover or the cell reselection according to an inter-group size if the handover or the cell reselection happens between groups; counting, by the terminal, the handover or the cell reselection according to an intra-group mobility counting result if the handover or the cell reselection happens within a group; and estimating, by the terminal, the mobility status of the terminal according to a counting result. With the method and apparatus of the embodiments of the present invention, the precision of the estimation is increased at a relatively low cost of signaling, and not only the prediction result is more accurate and the applicable scenarios are more wide, but also the air-interface signaling is simple.

## Description

### Technical Field

The present invention relates to a communication system, and in particular to a method and apparatus for estimating mobility status of a terminal in a mobile communication system.

### Background Art

In a wireless mobile communication system, handover in a connected mode or cell reselection in an idle mode needs to be performed by a terminal, so as to ensure the mobility of the terminal.

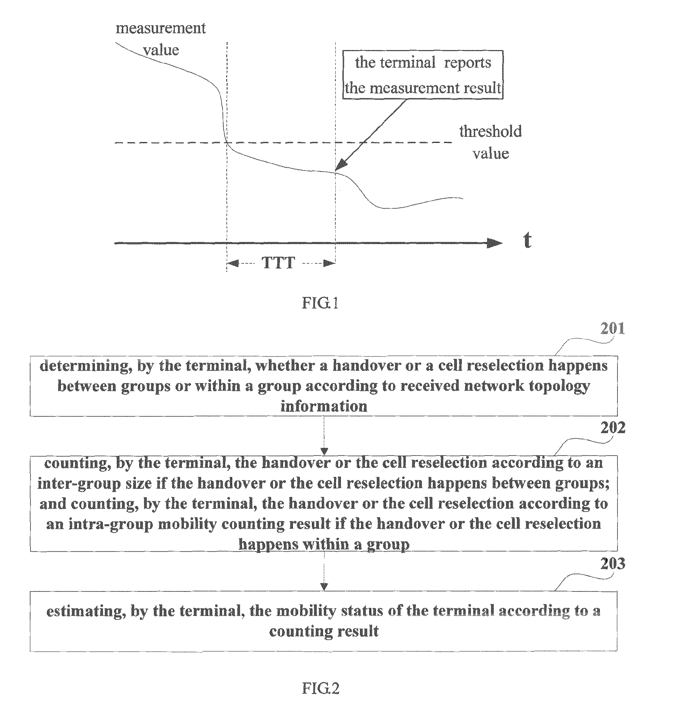

In the connected mode, in order to ensure correct triggering of the handover, the terminal needs to measure signal quality by means of radio resource management (RRM). If the measurement result always satisfies a certain condition (referred to as a triggering condition of an event) within a specified period of time (referred to as a time to trigger (TTT)), the terminal will report the measurement result to a base station. The base station may decide whether to start a handover process according to the measurement result. As shown in Fig. 1, if a triggering event is defined as "signal quality of a current serving cell being lower than a certain threshold value", the terminal will report the measurement result to the base station only when a measurement value is always lower than this threshold value within the time to trigger.

In such a process, both the time to trigger and the triggering condition of an event may affect a rate of success of the handover. For example, when the triggering event is "signal quality of a current serving cell being lower than a certain threshold value", the triggering event may be taken as a condition for triggering handover. As a serving cell needs extra time from obtaining a measurement report to triggering handover and performing handover, when the threshold is specified too low, it is possible that although the terminal reports the measurement result, the signal quality of the current serving cell deteriorates quickly, such that the terminal cannot proceed with subsequent actions such as handover triggering etc., and call drop will occur in the terminal. When the threshold is specified too high, a case will occur where the signal quality of the current serving cell is adequate to sustain the communication with the terminal, but the signal quality of a target cell is not good enough; at this moment, call drop will also occur in the terminal. At the same time, the time to trigger may also affect the effect of the handover. If the time to trigger is too long, the quality of the serving cell will extra deteriorate; at this moment, the service quality of the serving cell is inadequate to support the subsequent operation of the handover, thereby resulting in occurrence of call drop in the terminal. If the time to trigger is too short, the quality of the serving cell may fluctuate briefly, and the signal quality may be recovered shortly; however, at this moment, the terminal is handed over from the current serving cell and the quality of the target cell is not good enough, and it is easy that call drop occurs in the terminal.

Currently, the setting of time to trigger relates to many conditions, such as the static change of a channel, and the speed of a terminal, etc. The static change of a channel refers to that when the terminal is static, a change of a channel between the terminal and a base station; if a range of fluctuation of the channel is relatively large, in a general case, it needs to set the time to trigger to be relatively long, so as to smooth excessive fluctuation of the channel; and on the contrary, if the range of fluctuation of the channel is relatively small and is relatively smooth, the time to trigger may be set relatively short. Taking the speed of the terminal into consideration, the faster the speed of the terminal, the shorter the time to trigger needs, thereby preventing fast change of the channel along with the change of a position of a user; and on the contrary, the slower the speed of the terminal, the longer the time to trigger needs.

As the static change of a channel is hard to be judged, in an existing network, the time to trigger is set first in an ordinary sense, and if needs to be modified, the terminal estimates the mobility status of itself to find out a corresponding modification factor, and the original time to trigger is multiplied by this modification factor. Generally speaking, the modification factor is less than 1, and the faster the speed, the smaller the modification factor.

Likewise, in an idle mode, when the terminal performs the cell reselection, the terminal needs to measure a neighboring base station, so as to judge whether to reselect to a neighboring cell. The terminal may reselect to a neighboring cell only when the measurement estimation result of the neighboring cell is better than that of the current serving cell within the whole reselection time. The reselection time in the reselection is similar to the time to trigger in the handover, and needs also to be modified according to the mobility status of the terminal.

Furthermore, when the terminal is in the idle mode, the measurement estimation to the serving cell needs also to be modified by the modification factor related to its mobility status; the faster the speed, the more adverse to the estimation of the current serving cell by using the modification factor, which tends to reselection to a neighboring cell; and the slower the speed, the more advantageous to the estimation of the current serving cell by using the modification factor, which tends to accepting services in the current cell.

It was found by the inventors in the implementation of the present invention that a scheme of estimation to a mobility status of a terminal by an existing system is either taking no size of a cell in a mobile path into consideration, or counting repeatedly during the movement of the terminal, or counting omissively during the movement of the terminal, resulting in inaccuracy of the estimation to the mobility status of the terminal.

Following documents are listed for the easy understanding of the present invention and conventional technologies, which are incorporated herein by reference as they are fully stated in this text.
1. 3GPP TS 36.331 V10.2.0 (2011-06) Radio Resource Control (RRC) specification.(Release 10);
2. R2-114219, Discussion on mobile state detection for HetNet, ITRI; and
3. R2-113796, Discussion on enhancement of mobility state estimation, ZTE.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide a method and apparatus for estimating mobility status of a terminal, which are relatively simple in implementation, relatively low in signaling load and more accurate in estimation of mobility status.

According to one aspect of the embodiments of the present invention, there is provided a method for estimating mobility status of a terminal, wherein the method includes:
determining, by the terminal, whether a handover or a cell reselection happens between groups or within a group according to received network topology information;
counting, by the terminal, the handover or the cell reselection according to an inter-group size if the handover or the cell reselection happens between groups;
counting, by the terminal, the handover or the cell reselection according to an intra-group mobility counting result if the handover or the cell reselection happens within a group; and
estimating, by the terminal, the mobility status of the terminal according to a counting result.

According to another aspect of the embodiments of the present invention, there is provided a terminal, including:
a receiving unit configured to receive network topology information transmitted by a network side;
a determining unit configured to determine whether a handover or a cell reselection happens between groups or within a group according to the network topology information received by the receiving unit;
a counting unit configured to count the handover or the cell reselection according to an inter-group size when it is determined by the determining unit that the handover or the cell reselection happens between groups, or to count the handover or the cell reselection according to intra-group mobility counting result when it is determined by the determining unit that the handover or the cell reselection happens within a group; and
an estimating unit configured to estimate the mobility status of the terminal according to a counting result of the counting unit.

According to still another aspect of the embodiments of the present invention, there is provided a method for estimating mobility status of a terminal, wherein the method includes:
supplying network topology information to a terminal via broadcast or unicast by a base station, so that the terminal determines whether a handover or a cell reselection happens between groups or within a group according to the network topology information, counts the handover or the cell reselection according to a result of determination, and estimates the mobility status of the terminal according to a counting result.

According to further still another aspect of the embodiments of the present invention, there is provided a base station, including:
a transmitting unit configured to supply network topology information to a terminal via broadcast or unicast, so that the terminal determines whether a handover or a cell reselection happens between groups or within a group according to the network topology information, counts the handover or the cell reselection according to a result of determination, and estimats the mobility status of the terminal according to a counting result.

According to further still another aspect of the embodiments of the present invention, there is provided a computer-readable program, wherein when the program is executed in a terminal, the program enables a computer to carry out the method for estimating mobility status of a terminal applicable to a terminal as described above in the terminal.

According to further still another aspect of the embodiments of the present invention, there is provided a storage medium in which a computer-readable program is stored, wherein the computer-readable program enables a computer to carry out the method for estimating mobility status of a terminal applicable to a terminal as described above in a terminal.

According to further still another aspect of the embodiments of the present invention, there is provided a computer-readable program, wherein when the program is executed in a base station, the program enables a computer to carry out the method for estimating mobility status of a terminal applicable to a base station as described above in the base station.

According to further still another aspect of the embodiments of the present invention, there is provided a storage medium in which a computer-readable program is stored, wherein the computer-readable program enables a computer to carry out the method for estimating mobility status of a terminal applicable to a base station as described above in a base station.

The advantage of the embodiments of the present invention resides in that the embodiments of the present invention provide a new method for estimating mobility status of a terminal in a mobile communication system. In the embodiments, a base station transmits network deployment information, such an identifier of a high-layer cell, to the terminal, and the terminal may determine whether a handover or a cell reselection happens within a group or between groups according to the received information. If the handover or the cell reselection happens within a group, the terminal takes an intra-group counting result into consideration in counting; and if the handover or the cell reselection happens between groups, the terminal takes an inter-group size into consideration in counting. With such a method, the precision of the estimation is increased at a relatively low cost of signaling, and not only the prediction result is more accurate and the applicable scenarios are more wide, but also the air-interface signaling is simple.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

In the drawings:
Figure 1 is a schematic diagram of a time to trigger of a measurement report in the prior art;
Figure 2 is a flowchart of a method for estimating mobility status of a terminal provided by an embodiment of the present invention;
Figure 3 is a schematic diagram of handover of a terminal between cells;
Figure 4 is a schematic diagram of a case where different movement paths of a terminal result in inaccuracy of estimation to the mobility status;
Figure 5 is a schematic diagram of counting the movement of the terminal by using an improved method 1;
Figure 6 is a schematic diagram of a scenario of counting the movement of the terminal by using an improved method 2;
Figure 7 is a schematic diagram of another scenario of counting the movement of the terminal by using the improved method 2;
Figure 8 is a flowchart of a method for estimating mobility status of a terminal applicable to a base station provided by an embodiment of the present invention;
Figure 9 is a schematic diagram of the structure of a terminal provided by an embodiment of the present invention; and
Figure 10 is a schematic diagram of the structure of a base station provided by an embodiment of the present invention.

### Detailed Description of the Invention

Various embodiments of the present invention shall be described below with reference to the accompanying drawings. These embodiments are illustrative only and are not intended to limit the present invention.

In the embodiments of the present invention, for the sake of easy description, in a process of estimating a mobility status of a terminal, a macro cell and a relatively small cell within its coverage are referred to as a "group", and a stand-alone macro cell (i.e. with no relatively small cell within its coverage) or a stand-alone relatively small cell (i.e. with no covering by a macro cell) is also referred to as a "group". Wherein, the macro cell may be for example a cell covered by an evolved Node B (eNB), and the relatively small cell may be for example a cell covered by a remote radio head (RRH), a Pico, a relay, and a home eNB, etc.

An embodiment of the present invention provides a method for estimating mobility status of a terminal, as described in Embodiment 1 below.

### Embodiment 1

Fig. 2 is a flowchart of a method for estimating mobility status of a terminal provided by an embodiment of the present invention. Referring to Fig. 2, the method includes:
step 201: determining, by the terminal, whether a handover or a cell reselection happens between groups or within a group according to received network topology information;
step 202: counting, by the terminal, the handover or the cell reselection according to an inter-group size if the handover or the cell reselection happens between groups; and counting, by the terminal, the handover or the cell reselection according to an intra-group mobility counting result if the handover or the cell reselection happens within a group; and
step 203: estimating, by the terminal, the mobility status of the terminal according to a counting result.

In step 201, in order that the terminal can identify whether the handover or the cell reselection happens within a group or between groups, the base station will transmit network topology information to the terminal, and indicate a top-layer cell, i.e. a cell covering itself, of a current cell, via the network topology information. If there exists no other cell covering itself, the top-layer cell of the current cell shall be deemed as itself. In an embodiment, the base station may transmit the network topology information to the terminal in a unicast or broadcast manner. In an embodiment, the network topology information may further include an identifier of the top-layer cell. A detailed processing at the base station side shall be described in an embodiment below. With the network topology information, the terminal may determine whether the handover or cell the reselection happens between groups or within a group.

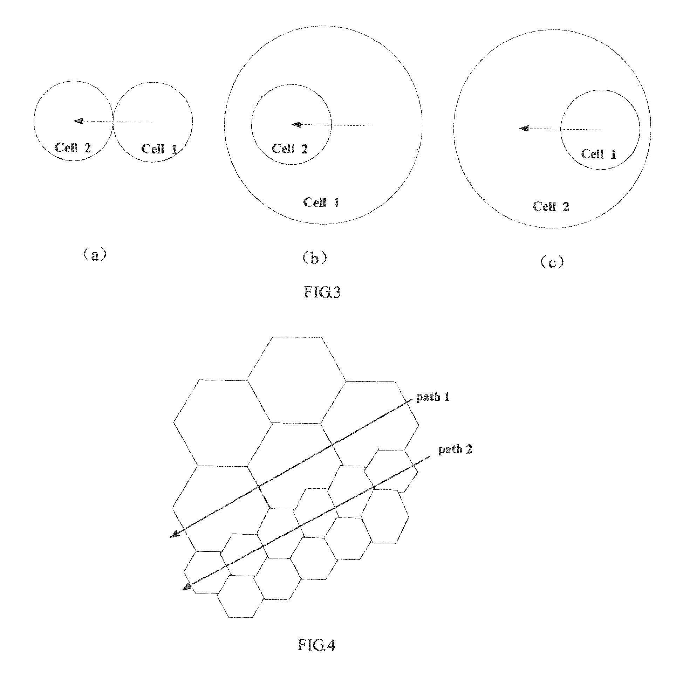

For example, when the terminal is handed over from a cell 1 to a cell 2, if both top-layer cells reported by the cell 1 and the cell 2 are themselves, the terminal may determine that the handover happens between groups, as shown in Fig. 3(a); if a top-layer cell reported by the cell 1 is itself and a top-layer cell reported by the cell 2 is the cell 1, the terminal may determine that the handover happens within a group, as shown in Fig. 3(b); and if a top-layer cell reported by the cell 1 is the cell 2 and a top-layer cell reported by the cell 2 is itself, the terminal may determine that the handover happens within a group, as shown in Fig. 3(c).

In step 202, the inter-group size may be the maximum value between a size of a macro cell within the group and a intra-group counting result counted within current group when the terminal moves out of the current group, and may also be a sum of a size of a macro cell within the group and the intra-group counting result counted within current group when the terminal moves out of the current group. Wherein the inter-group size is the intra-group counting result counted within the current group when the terminal moves out of the current group if there is no macro cell within the group, and the inter-group size is the size of the macro cell within the group if there is no relatively small cell within the group.

For example, assuming that when the terminal moves out of an *(N-1)-th* group ("moving out of an *(N-1)-th* group" refers to that the terminal is handed over from the *(N-1)-th* group to an *N-th* group or goes back to the *N-th* group from the *(N-1)-th* group) in its moving path, its counting result is R(N-1) (R(0)=0), then its counting result is R(N)=R(N-1)+G(N) when the terminal moves out of the *N-th* group; where, G(N) is an inter-group size of the *N-th* group. In an embodiment, G(N)=max (the size of the macro cell within the group, g(N)); if there is no macro cell within the group, G(N)=g(N); and if there is no relatively small cell within the group, that is, there is only one macro cell, G(N)= the size of the macro cell within the group. In another embodiment, G(N)=the size of the macro cell within the group + g(N); where, g(N) is the intra-group counting result within the *N-th* group when the terminal moves out of the *N-th* group; if there is no macro cell within the group, G(N)=g(N); and if there is no relatively small cell within the group, that is, there is only one macro cell, G(N)= the size of the macro cell within the group.

In step 202, the intra-group mobile counting result may be a counting result of a relatively small cell handed over or cell reselected when the terminal moves within the group, and may also be a sum of a counting result of a relatively small cell handed over or cell reselected when the terminal moves within the group and a size of a macro cell within the group. Wherein if there is no macro cell within the group, the intra-group mobile counting result is the counting result of the relatively small cell handed over or cell reselected when the terminal moves within the group.

For example, assuming also that when the terminal moves out of an *(N-1)-th* group ("moving out of an *(N-1)-th* group" refers to that the terminal is handed over from the *(N-1)-th* group to an *N-th* group or goes back to the *N-th* group from the *(N-1)-th* group) in its moving path, its counting result is R(N-1) (R(0)=0), then its counting result is r(N,m)=R(N-1)+g(N, m) when the terminal moves within the *N-th* group; where, g(N, m) is an intra-group counting result of an *m-th* relatively small cell when the terminal moves out of the *N-th* group. In an embodiment, g(N, m) is a result of counting by the terminal to only a relatively small cell handed over or cell reselected when the terminal moves within the group; if there is no relatively small cell within the group (that is, this group is a stand-alone macro cell), g(N, m)=g(N)=0. In another embodiment, g(N, m) is a result of counting by the terminal to only a relatively small cell handed over or cell reselected when the terminal moves within the group + the size of a macro cell within the group; where, g(N, 0)=the size of the macro cell within the group; that is, an initial value of the intra-group counting is the size of the macro cell within the group only if the terminal moves into the *N-th* group. In this embodiment, if there is no macro cell in the group, the size of the macro cell within the group is 0, and it is returned back to the pervious embodiment; and if there is no relatively small cell in the group, g(N, m)=g(N)=the size of the macro cell.

In step 202, for different combinations defined by G(N) and g(N, m), G(N)=g(N, m) if the first implementation mode is used by the G(N) and the second implementation mode is used by the g(N, m).

For clarity and easy understanding of the method of this embodiment and its effect, the effect of the method of this embodiment shall be described below by way of examples and by comparing with an existing counting method.

Fig. 4 is a schematic diagram of a case where different movement paths of the terminal result in inaccuracy of estimation to the mobility status by using an existing method. As shown in Fig. 4, by using an existing counting method, triggering a terminal by a base station to detect a mobility status includes: transmitting a parameter needed in a time to trigger by a base station to a terminal via broadcast (when the terminal is in an idle mode) or unicast (when the terminal is in a connected mode), wherein, the parameter includes a counting time period, a modified counting time period, a high threshold value and an intermediate threshold value. The terminal may count the number of times of the handover or the cell reselection within the above specified counting time period. When a counting time expires, the terminal determines that it is in a high-speed mobility status if the counting result is greater than the high threshold value, and determines that it is in an intermediate-speed mobility status if the counting result is not greater than the high threshold value but is greater than the intermediate threshold value; and determines that it is in an ordinary mobility status if neither a high-speed mobility status nor an intermediate-speed mobility status is detected within the modified counting time period. After a mobility status of the terminal is determined, as the terminal has obtained in advance modification factors for different processes (handover or cell reselection) in different mobility statuses, the terminal may select a modification factor corresponding to an actually determined mobility status, and modify a corresponding process.

However, it can be seen from Fig. 4 that a size of a cell is not taken into consideration by the terminal in counting the handover or the cell reselection. Referring to Fig. 4, the terminal moves through a path 1 and a path 2 respectively at the same actual speed. In moving through the path 1, the number of times of the handover is obviously less than the number of times of the handover in moving through the path 2, as the radius of a cell passed by the terminal is relatively large. Therefore, the terminal may obtain different mobility statuses in moving through the two paths. In an actual network, relatively large differences may exist between sizes of cells, the topology structure of the network is relatively complex, and such an issue will be brought about if the size of a cell is not taken into consideration in determining a mobility status of the terminal.

In order to address the above issue, many improving methods have been proposed; however, each method has defects of its own. Following description is given by comparing with the method of an embodiment of the present invention.

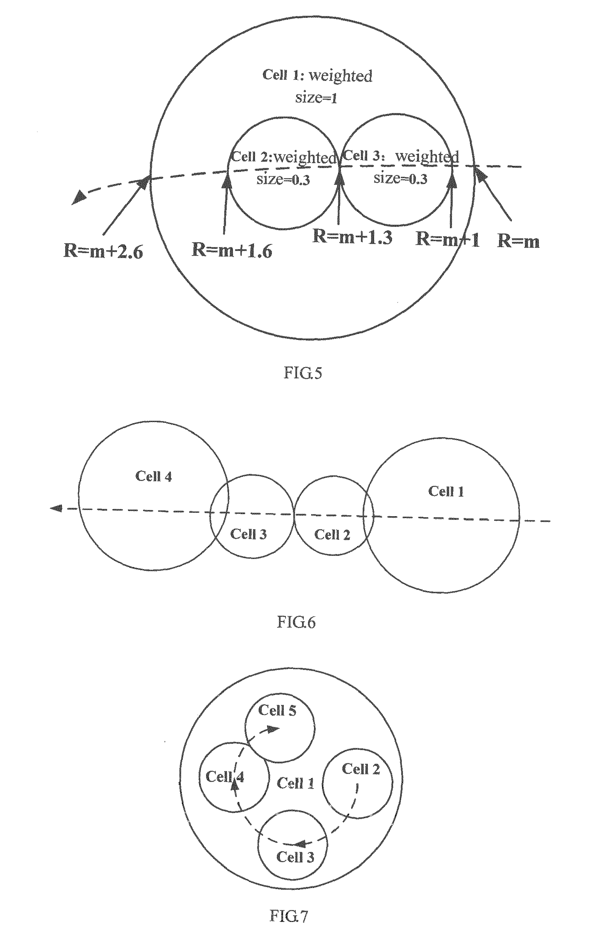

Fig. 5 is an example of using improving method 1. As shown in Fig. 5, a base station broadcasts a weighted size of a cell, and a terminal modifies a judgment process of a mobility status according to the received weighted size. For example, a weighted size of a macro cell is 1, and a weighted size of a micro cell is 0.3. Thus, the terminal accumulatively adds 1 when the handover or the cell reselection is performed once from the macro cell; and the terminal accumulatively adds 0.3 when the handover or the cell reselection is performed once from the micro cell. In this method, the counting result of the terminal includes a factor of a size of a cell, but brings about an issue of repeated counting, resulting in an estimation result faster than an actual moving speed. For example, in Fig. 5, when the terminal moves along the dotted line, and enters into a cell 1 from the uttermost right side of the figure, a counting value at the first time of entering into the cell 1 is m. It can be seen that when the terminal moves out of the cell 1 from the uttermost left side, the terminal counts the cell 1 twice, counts a cell 2 and a cell 3 once, respectively, and a counting result is R=m+2.6. But actually, in this process, a most accurate method should count the cell 1 once; that is, a final counting result should be R=m+1.

According to the method provided by the embodiment of the present invention, cells 1-3 are taken as a group, in which a top-layer cell of the cells 2 and 3 is the cell 1, and a top-layer cell of the cell 1 is the cell 1 itself. It can be seen that when the terminal moves out of the cell 1 from the uttermost left side of the figure, that is, moving out of this group, according to a counting formula of inter-group movement, as the counting value R(N-1) before entering into the cell 1, i.e. entering into the group, is m, if the first implementation mode of G(N) and the first implementation mode of g(N, m) are used, g(N)=g(N, 2)=0.6, G(N)=max(1, 0.6)=1, that is, an inter-group size G(N) of this group is 1, then it can be obtained that the counting result of the terminal is: R(N)=R(N-1)+G(N)=m+1. If the first implementation mode of G(N) and the second implementation mode of g(N, m) are used, g(N)=g(N, 2)==1+0.6=1.6, G(N)=max(1,1.6)=1.6, R(N)=R(N-1)+G(N)=m+1.6. If the second implementation mode of G(N) and the first implementation mode of g(N, m) are used, g(N)=g(N, 2)=0.6, G(N)= 1+0.6=1.6, R(N)=R(N-1)+G(N)=m+1.6. If the second implementation mode of G(N) and the second implementation mode of g(N, m) are used, g(N)=g(N, 2)=1.6, G(N)= 1+1.6=2.6, R(N)=R(N-1)+G(N)=m+2.6. It can be seen from the above analysis that different implementation mode of G(N) and g(N, m) may bring different counting results. And at the same time, if the second implementation mode of G(N) and g(N, m) are used simultaneously, the counting result will also include some repeated counting. However, an effect superior to the prior art may be brought only if the second implementation mode of G(N) and g(N, m) are not used simultaneously.

Figs. 6 and 7 are examples of using improving method 2. As shown in Figs. 6 and 7, counting is only performed to a macro cell in the network in this method, and counting is not performed to other relatively small cells (such as a micro cell, and a relay, etc.). Thus, a size of a cell to which counting is performed is even, and a result of prediction of mobility is relatively accurate. In order that the terminal identifies a macro cell, following two manners may be adopted:
1) dividing a physical identifier domain of a base station into two sets, thus a physical identifier of the macro cell is selected from one of the stand-alone sets, and physical identifiers of other cells are selected from another set. As a physical identifier is information that should be obtained by a terminal in normal communicating, even if without performing estimation to a mobility status, the terminal may naturally extra obtain information on "whether a current cell is a macro cell" by the dividing of the physical identifier domain; and
2) broadcasting a new message by the base station, so as to indicate whether itself needs to be counted by the terminal. For example, the base station may broadcast information bit of 1 bit; wherein, "1" indicates that the base station needs to be counted, and "0" indicates that the base station may not be counted.

With the above two manners, the terminal may learn whether a base station needs to be counted. However, this method will bring an issue of omissive counting. In Fig. 6, several stand-alone relatively small cells (cells 2 and 3) are in the moving path of the terminal, and if the indication manner 1 is adopted, cells 2 and 3 shall not be counted. In Fig. 7, several stand-alone relatively small cells (cells 2-5) are in the coverage of macro cell 1. When some terminals move in the coverage of cell 1 within the whole counting time period or at the end of the counting time period, the handed over cells 2-5 shall not be counted whichever manner 1 or manner 2 is used, thereby resulting in an issue of omissive counting. If omissive counting is occurred, a case will occur where an estimated mobility status is lower than the actual speed.

According to the method of the embodiment of the present invention, for the scenario of Fig. 6, each cell is a group. It can be seen that the process of movement of the terminal is inter-group movement. For cells 1 and 4, each group has only one macro cell, for cells 2 and 3, each group has only one relatively small cell, and according to the inter-group counting method of the embodiment of the present invention, the obtained counting result of the movement of the terminal is: a sum of sizes of the two macro cells (cells 1 and 4) and intra-group counting result of the two relatively small cells (cells 2 and 3). Assuming that the cell 4 is the *N-th* group out of which the terminal moves in the process of counting, R(N) =R(n-4)+G (N-3) +G(N-2) +G(N-1) +G(N) = R(n-4)+the size of the macro cell 1+the size of the relatively small cell 2+the size of the relatively small cell 3+the size of the macro cell 4. For the scenario of Fig. 7, cells 1-5 are taken as a group, and it can be seen that the process of movement of the terminal within the cell 1 is intra-group movement. Assuming that the group where cells 1-5 are present is the *N-th* group into which the terminal moves in the process of counting, and cells 2-4 are first to third relatively small cells out of which the terminal moves in the *N-th* group, and according to the first counting method of the intra-group counting method of the embodiment of the present invention, the obtained counting result of the movement of the terminal is: r(N,3)=R(N-1)+g(N,3)= R(N-1)+the size of the relatively small cell 2+the size of the relatively small cell 3+the size of the relatively small cell 4.

An embodiment of the present invention proposes a new method for estimating mobility status of a terminal in a mobile communication system. In the embodiment, a base station transmits network deployment information, such an identifier of a high-layer cell, to the terminal, and the terminal may determine whether a handover or a cell reselection happens within a group or between groups according to the received information. If the handover or the cell reselection happens within a group, the terminal takes an intra-group counting result into consideration in counting; and if the handover or the cell reselection happens between groups, the terminal further takes an inter-group size into consideration in counting. With such a method, the precision of the estimation is increased at a relatively low cost of signaling, and not only the prediction result is more accurate and the applicable scenarios are more wide, but also the air-interface signaling is simple.

An embodiment of the present invention further provides a method for estimating mobility status of a terminal, as described in Embodiment 2 below.

### Embodiment 2

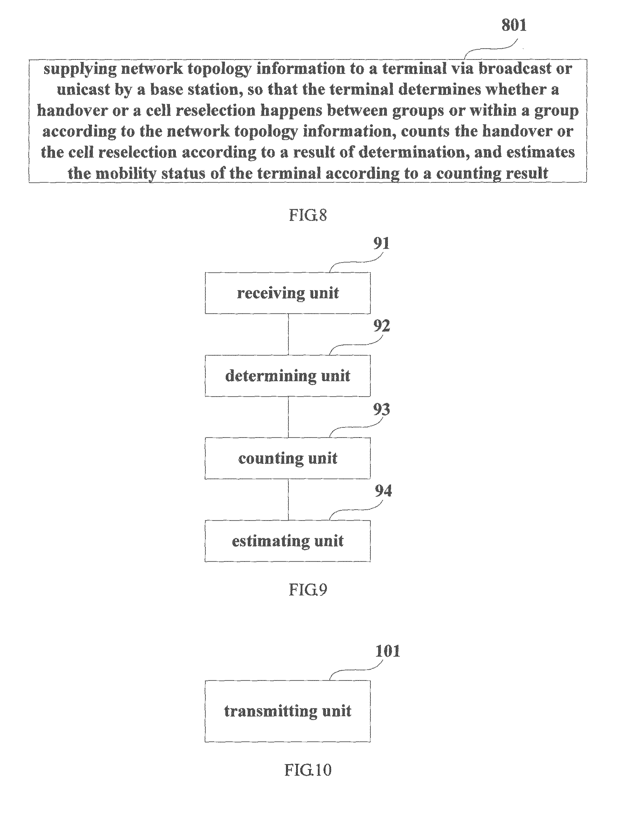

Fig. 8 is a flowchart of the method for estimating mobility status of a terminal applicable to a base station provided by an embodiment of the present invention. Referring to Fig. 8, the method includes:
step 801: supplying network topology information to a terminal via broadcast or unicast by a base station, so that the terminal determines whether a handover or a cell reselection happens between groups or within a group according to the network topology information, counts the handover or the cell reselection according to a result of determination, and estimates the mobility status of the terminal according to a counting result.

Wherein the network topology information inlcudes a top layer cell of a current cell and its identifier.

In this embodiment, in order that the terminal can identify whether a handover or a cell reselection happens between groups or within a group, the base station may supply related network topology information to the terminal in a broadcast or unicast manner. In particular, the base station may notify the terminal of which cell is a top layer cell (i.e. a cell covering itself) of the current cell, for example, itself or another cell; if it is itself, it may not be reported separately (actually, the identifier of itself may be obtained in another process); and if it is another cell, the identifier of this top layer cell may further be reported. The identifier of a cell may be a physical identifier of the cell or cell identity of other type. In this way, in the handover or the cell reselection, if the terminal finds that top layer cells of a target cell and a source cell are different, it determines that the handover or the cell reselection happens between groups; and in other cases, it determines that the handover or the cell reselection happens within a group. And estimation to the mobility status of the terminal may be performed by using the method of Embodiment 1.

It should be noted that in actual network deployment, a cell may be covered by multiple layers, such as two layers, three layers, or more. The top layer here may preferably be a layer of a maximum covering area. And at the same time, in an actual network, it is possible that a cell is not completely covered by another cell, and is only partially covered, or a cell may be covered by two cells or more cells at the same time. At this time, the network side may set grouping as actually demanded. For example, a cell that is partially covered may be set as a stand-alone group, and may constitute a group with another cell, with a top layer in each group being set by the network side as actually demanded. Furthermore, a size of a cell in the present invention may be an actual physical size of the cell, such as a radius or a diameter, and may also be a logic size set by the network side as actually demanded, such as a weighted size, and a level of a size of a cell, etc.

An embodiment of the present invention proposes a new method for estimating mobility status of a terminal in a mobile communication system. In the embodiment, a base station transmits network deployment information, such an identifier of a high-layer cell, to the terminal, and the terminal may determine whether a handover or a cell reselection happens within a group or between groups according to the received information. If the handover or the cell reselection happens within a group, the terminal takes an intra-group counting result into consideration in counting; and if the handover or the cell reselection happens between groups, the terminal further takes an inter-group size into consideration in counting. With such a method, the precision of the estimation is increased at a relatively low cost of signaling, and not only the prediction result is more accurate and the applicable scenarios are more wide, but also the air-interface signaling is simple.

An embodiment of the present invention further provides a terminal, as described in Embodiment 3 below. As the principle of the terminal for solving problems is similar to that of the method of Embodiment 1 above, the implementation of the method may be referred to for the implementation of the terminal, and the repeated parts shall not be described any further.

### Embodiment 3

Fig. 9 is a schematic diagram of the structure of the terminal provided by an embodiment of the present invention. Referring to Fig. 9, the terminal comprises:
a receiving unit 91 configured to receive network topology information transmitted by a network side;
wherein, the network side may be a macro base station, such as an eNB, and may also be other small base stations, such as an RRH, a micro, a relay, and an HeNB, etc.;
a determining unit 92 configured to determine whether a handover or a cell reselection happens between groups or within a group according to the network topology information received by the receiving unit 91;
a counting unit 93 configured to count the handover or the cell reselection according to an inter-group size when it is determined by the determining unit 92 that the handover or the cell reselection happens between groups, or to count the handover or the cell reselection according to intra-group mobility counting result when it is determined by the determining unit that the handover or the cell reselection happens within a group; and
an estimating unit 94 configured to estimate the mobility status of the terminal according to a counting result of the counting unit 93.

In an embodiment, the inter-group size is the maximum value between a size of a macro cell within the group and the intra-group counting result counted within current group when the terminal moves out of the current group. In another embodiment, the inter-group size is a sum of a size of a macro cell within the group and the intra-group counting result counted within current group when the terminal moves out of the current group. Wherein, the inter-group size is the intra-group counting result counted within the current group when the terminal moves out of the current group if there is no macro cell in the group; and the inter-group size is the size of the macro cell within the group if there is no relatively small cell in the group.

In an embodiment, the intra-group mobility counting result is a counting result of a relatively small cell handed over or cell reselected when the terminal moves within the group. In another embodiment, the intra-group mobility counting result is the sum of a counting result of a relatively small cell handed over or cell reselected when the terminal moves within the group and a size of a macro cell within the group. Wherein, the intra-group mobility counting result is the counting result of the relatively small cell handed over or cell reselected when the terminal moves within the group if there is no macro cell within the group.

The terminal proposed by the embodiment of the present invention determines whether a handover or a cell reselection happens within a group or between groups according to the received information. If the handover or the cell reselection happens within a group, the terminal takes an intra-group counting result into consideration in counting; and if the handover or the cell reselection happens between groups, the terminal further takes an inter-group size into consideration in counting. With such a method, the precision of the estimation is increased at a relatively low cost of signaling, and not only the prediction result is more accurate and the applicable scenarios are more wide, but also the air-interface signaling is simple.

An embodiment of the present invention further provides a base station, as described in Embodiment 4 below. As the principle of the base station for solving problems is similar to that of the method in Embodiment 2 above, the implementation of the method may be referred to for the implementation of the base station, and the repeated parts shall not be described any further.

### Embodiment 4

Fig. 10 is a schematic diagram of the structure of a base station provided by an embodiment of the present invention. Referring to Fig. 10, the base station includes:
a transmitting unit 101 configured to supply network topology information to a terminal via broadcast or unicast, so that the terminal determines whether a handover or a cell reselection happens between groups or within a group according to the network topology information, counts the handover or the cell reselection according to a result of determination, and estimates the mobility status of the terminal according to a counting result.

Wherein the network topology information includes a top layer cell of the current cell and its identifier.

In this embodiment, in order that the terminal can identify whether a handover or a cell reselection happens between groups or within a group, the base station may supply related network topology information to the terminal in a broadcast or unicast manner. In particular, the base station may notify the terminal of which cell is a top layer cell (i.e. a cell covering itself) of the current cell, for example, itself or another cell; if it is itself, it may not be reported separately (actually, the identifier of itself may be obtained in another process); and if it is another cell, the identifier of this top layer cell may further be reported. The identifier of a cell may be a physical identifier of the cell or cell identity of other type. In this way, in the handover or the cell reselection, if the terminal finds that top layer cells of a target cell and a source cell are different, it determines that the handover or the cell reselection happens between groups; and in other cases, it determines that the handover or the cell reselection happens within a group. And estimation to the mobility status of the terminal may be performed by using the method of Embodiment 1.

The base station proposed by the embodiment of the present invention transmits network deployment information, such an identifier of a high-layer cell, to the terminal, and the terminal may determine whether a handover or a cell reselection happens within a group or between groups according to the received information. If the handover or the cell reselection happens within a group, the terminal takes an intra-group counting result into consideration in counting; and if the handover or the cell reselection happens between groups, the terminal further takes an inter-group size into consideration in counting. With such a method, the precision of the estimation is increased at a relatively low cost of signaling, and not only the prediction result is more accurate and the applicable scenarios are more wide, but also the air-interface signaling is simple.

An embodiment of the present invention further provides a computer-readable program, wherein when the program is executed in a terminal, the program enables a computer to carry out the method for estimating mobility status of a terminal as described in Embodiment 1 in the terminal.

An embodiment of the present invention further provides a storage medium in which a computer-readable program is stored, wherein the computer-readable program enables a computer to carry out the method for estimating mobility status of a terminal as described in Embodiment 1 in a terminal.

An embodiment of the present invention further provides a computer-readable program, wherein when the program is executed in a base station, the program enables a computer to carry out the method for estimating mobility status of a terminal as described in Embodiment 2 in the base station.

An embodiment of the present invention further provides a storage medium in which a computer-readable program is stored, wherein the computer-readable program enables a computer to carry out the method for estimating mobility status of a terminal as described in Embodiment 2 in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for estimating mobility status of a terminal, wherein the method comprises:
determining, by the terminal, whether a handover or a cell reselection happens between groups or within a group according to received network topology information;
counting, by the terminal, the handover or the cell reselection according to an inter-group size if the handover or the cell reselection happens between groups;
counting, by the terminal, the handover or the cell reselection according to an intra-group mobility counting result if the handover or the cell reselection happens within a group; and
estimating, by the terminal, the mobility status of the terminal according to a counting result.

2. The method according to claim 1, wherein,
the inter-group size is the maximum value between a size of a macro cell within the group and the intra-group counting result counted within current group when the terminal moves out of the current group; or
the inter-group size is a sum of a size of a macro cell within the group and the intra-group counting result counted within current group when the terminal moves out of the current group.

3. The method according to claim 2, wherein,
the inter-group size is the intra-group counting result counted within the current group when the terminal moves out of the current group if there is no macro cell within the group; and
the inter-group size is the size of the macro cell within the group if there is no relatively small cell within the group.

4. The method according to claim 1, wherein,
the intra-group mobility counting result is a counting result of a relatively small cell handed over or cell reselected when the terminal moves within the group; or
the intra-group mobility counting result is a sum of a counting result of a relatively small cell handed over or cell reselected when the terminal moves within the group and a size of a macro cell within the group.

5. The method according to claim 4, wherein,
the intra-group mobility counting result is the counting result of the relatively small cell handed over or cell reselected when the terminal moves within the group if there is no macro cell within the group.

6. A terminal, comprising:
a receiving unit configured to receive network topology information transmitted by a network side;
a determining unit configured to determine whether a handover or a cell reselection happens between groups or within a group according to the network topology information received by the receiving unit;
a counting unit configured to count the handover or the cell reselection according to an inter-group size when it is determined by the determining unit that the handover or the cell reselection happens between groups, or to count the handover or the cell reselection according to intra-group mobility counting result when it is determined by the determining unit that the handover or the cell reselection happens within a group; and
an estimating unit configured to estimate the mobility status of the terminal according to a counting result of the counting unit.

7. The terminal according to claim 6, wherein,
the inter-group size is the maximum value between a size of a macro cell within the group and the intra-group counting result counted within current group when the terminal moves out of the current group; or
the inter-group size is a sum of a size of a macro cell within the group and the intra-group counting result counted within current group when the terminal moves out of the current group.

8. The terminal according to claim 7, wherein,
the inter-group size is the intra-group counting result counted within the current group when the terminal moves out of the current group if there is no macro cell within the group; and
the inter-group size is the size of the macro cell within the group if there is no relatively small cell within the group.

9. The terminal according to claim 6, wherein,
the intra-group mobility counting result is a counting result of a relatively small cell handed over or cell reselected when the terminal moves within the group; or
the intra-group mobility counting result is a sum of a counting result of a relatively small cell handed over or cell reselected when the terminal moves within the group and a size of a macro cell within the group.

10. The terminal according to claim 9, wherein,
the intra-group mobility counting result is the counting result of the relatively small cell handed over or cell reselected when the terminal moves within the group if there is no macro cell within the group.

11. A method for estimating mobility status of a terminal, wherein the method comprises:
supplying network topology information to a terminal via broadcast or unicast by a base station, so that the terminal determines whether a handover or a cell reselection happens between groups or within a group according to the network topology information, counts the handover or the cell reselection according to a result of determination, and estimates the mobility status of the terminal according to a counting result.

12. The method according to claim 11, wherein,
the network topology information includes a top layer cell of the current cell.

13. A base station, comprising:
a transmitting unit configured to supply network topology information to a terminal via broadcast or unicast, so that the terminal determines whether a handover or a cell reselection happens between groups or within a group according to the network topology information, counts the handover or the cell reselection according to a result of determination, and estimates the mobility status of the terminal according to a counting result.

14. The base station according to claim 13, wherein,
the network topology information includes a top layer cell of the current cell.

15. A computer-readable program, wherein when the program is executed in a terminal, the program enables a computer to carry out the method for estimating mobility status of a terminal as claimed in any one of claims 1-5 in the terminal.

16. A storage medium in which a computer-readable program is stored, wherein the computer-readable program enables a computer to carry out the method for estimating mobility status of a terminal as claimed in any one of claims 1-5 in a terminal.

17. A computer-readable program, wherein when the program is executed in a base station, the program enables a computer to carry out the method for estimating mobility status of a terminal as claimed in claim 11-12 in the base station.

18. A storage medium in which a computer-readable program is stored, wherein the computer-readable program enables a computer to carry out the method for estimating mobility status of a terminal as claimed in claim 11-12 in a base station.
